(19) Europäisches Patentamt

European Patent Office

Office européen des brevets

(11) **EP 4 546 484 A1**

(12) **EUROPEAN PATENT APPLICATION**

(43) Date of publication:
30.04.2025 Bulletin 2025/18

(21) Application number: 23306871.7

(22) Date of filing: 27.10.2023

(51) International Patent Classification (IPC):
*H01M 10/0562* (2010.01)    *H01M 10/052* (2010.01)
*H01M 10/056* (2010.01)

(52) Cooperative Patent Classification (CPC):
**H01M 10/052; H01M 10/056; H01M 10/0562;**
H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Basque Center for Macromolecular Design and
Engineering, POLYMAT Fundazioa
20018 Donostia-San Sebastián (Gipuzkoa) (ES)**
• **Universidad del País Vasco/Euskal Herriko
Unibertsitatea
48940 Leioa, Vizcaya (ES)**
• **Institut Polytechnique de Grenoble
38000 Grenoble (FR)**
• **Université Grenoble Alpes
38400 Saint-Martin-d'Hères (FR)**

• **Centre National de la Recherche Scientifique
75016 Paris (FR)**
• **Université Savoie Mont Blanc
73000 Chambéry (FR)**

(72) Inventors:
• **VILLALUENGA ARRANZ, Irune
20018 Donostia-San Sebastián, Gipuzkoa (ES)**
• **STANKIEWICZ, Natalia
20018 Donostia-San Sebastián, Gipuzkoa (ES)**
• **DEVAUX, Didier
38402 Saint Martin d'Hères (FR)**

(74) Representative: **ABG Intellectual Property Law,
S.L.
Avenida de Burgos, 16D
Edificio Euromor
28036 Madrid (ES)**

(54) **HYBRID SOLID ELECTROLYTES AND METHOD OF PREPARATION THEREOF**

(57)    The present invention refers to method for preparing a hybrid organic-inorganic solid electrolyte (HSE) based on in-situ synthesized inorganic phase in the presence of polymer. The described approach delivers flexible membranes with high ionic conductivity values ($>10^{-4}$ S/cm at room temperature) and excellent mechanical properties, especially in terms of yield stress ($\sigma y$), which are suitable for electrochemical applications in solid-state lithium metal batteries.

**Figure 3**

EP 4 546 484 A1

**Description**

**FIELD OF THE INVENTION**

The present invention relates to the field of solid electrolytes for electrochemical applications, particularly to the preparation of hybrid organic-inorganic solid electrolytes (HSEs) and their application in all-solid-state lithium batteries.

**BACKGROUND**

All solid-state batteries (ASSBs) have been identified as a game-changing technology for developing high-performance energy storage systems that are safer and more sustainable to achieve a carbon-neutral economy. In this context, solid-state electrolytes (SSEs) may be a valid alternative to flammable liquid electrolytes which pose serious safety concerns in current batteries.

Oxides, sulfides and halides are the most investigated types of inorganic SSEs. The reported ionic conductivity values for these materials exceed 1 mS/cm at room temperature (RT). Oxide-based electrolytes, like $Li_3 \times La_{2/3x}TiO_3$ (LLTO), $Li_7La_3Zr_2O_{12}$ (LLZO) or $(Li_{1+x}Al_xGe_{2-x}(PO4)_3$ (LAGP), show good mechanical properties and wide electrochemical window. Nevertheless, the sintering temperatures may limit their practical application and processability. Sulfide-based SSEs, such as $Li_{10}GeP_2S_{12}$ (LGPS), glass-ceramic $Li_2S-P_2S_5$, LiePSsCl (LPSC), present poor air stability or instable interfaces with electrodes despite their ionic transport properties being typically excellent. Halide-based electrolytes are characterized by larger ionic radii.

Among halide electrolytes, Lithium Indium Chloride (LIC) has attracted considerable attention as it presents high ionic conductivity values (reportedly, 2 mS/cm at room temperature) and can be obtained via an environment-friendly and cost-effective synthetic route which involves the use of water.

Inorganic halide electrolytes such as LIC can be combined with polymer electrolytes in so-called "hybrid solid electrolytes" (HSEs) which are receiving growing interest in an attempt to overcome the drawbacks of either purely organic or purely inorganic electrolytes, thus favouring a synergy of their best properties. Particularly, vast amount of research has been devoted to the systems based on poly(ethylene oxide) (PEO) (for example see J. Feng et al., Nano Convergence 2021, vol. 8, 2; DOI: 10.1186/s40580-020-00252-5). Nevertheless, practical applications of this polymer binder for HSEs are rather limited. In practice, the presence of alternative, competing Li-ion conduction pathways in inorganic anion-based hybrids or the degradation of the inorganic electrolyte due to PEO presence can cause overall ionic conductivity decrease.

Several synthetic strategies have been devised in order to obtain an inorganic-organic electrolyte material with desirable mechanical and electrochemical properties. WO16210371 A1 discloses hybrid organic-inorganic electrolyte compositions that include both organic and inorganic constituent components by first forming an inorganic phase with void spaces which are further filled with a polymer.

CN115700941 A discloses a method for preparing a polymer-coated halide solid-state electrolyte. Particularly, the document provides method for preparing electrolytes containing $Li_3InCl_6$ and various polymers via prior formation of the inorganic phase.

B. Zhao et al. (Materials Letters 2022, 310, 131463, DOI: 10.1016/j.matlet.2021.131463) describe an inorganic-inorganic HSE prepared from a solution of LiCl, $InCl_3 \cdot 4H_2O$ and glass fibers. The resulting material can be processed by roll-pressing and displays a Li-ion conductivity of $5.4 \times 10^{-4}$ S cm$^{-1}$ at room temperature.

E. Nazmutdinova et al. (ChemRxiv 2023, DOI: 10.26434/chemrxiv-2023-p784w) report a water-based approach for the preparation of inorganic-conductive polymer composite materials obtained by mixing $Li_3InCl_6$ precursors and conductive polymer poly(3,4-ethylendioxythiophene)/poly(styrene sulfonate) (PEDOT:PSS) in water in one-pot. These composite materials with different amounts of conductive polymer were used as catholytes.

Thus, the preparation of efficient hybrid solid electrolyte with optimal mechanical and electronic properties and good processability is still a challenge in the field.

**BRIEF DESCRIPTION OF THE INVENTION**

The inventors have found an innovative approach for the preparation of organic-inorganic HSEs based on in-situ synthesis from an inorganic precursor mixture in the presence of an organic precursor (specifically a non-conducting polymer). Compared to traditional methods that simply physically blend a pre-formed inorganic crystalline species obtained at high temperature, with a certain organic precursor, such as a polymer, in the method of the present invention the HSE results from mixing an inorganic precursor mixture and an organic polymer prior to a heating step at high temperature. As a consequence, the inorganic crystalline species is formed in the presence of the polymer, affording in a simpler manner a HSE material with improved mechanical properties and that can be used for the development of battery materials with higher performance. More specifically, the HSEs obtained by the method of the invention possess improved conductivity over a broad temperature range and improved yield stress ($\sigma y$).

Thus, in a first aspect, the invention refers to a method for preparing a hybrid solid electrolyte comprising the steps of:

> i. providing an inorganic mixture comprising an alkali metal salt with a halide salt of a trivalent metal;
> ii. adding a non-conducting polymer or monomers thereof to the inorganic mixture of step i) to obtain an organic-inorganic mixture;

iii. heating the organic-inorganic mixture;

and optionally extruding the heated organic-inorganic mixture during or after step iii.

In a preferred particular embodiment, the invention refers to a method for preparing a hybrid solid electrolyte comprising the steps of:

i. providing an inorganic mixture in the form of a solution comprising an alkali metal salt and a halide salt of a trivalent metal;

ii. drying said solution to obtain an inorganic precursor;

iii. dissolving or dispersing the inorganic precursor in at least a solvent;

iv. adding a solution of a non-conducting polymer or of monomers thereof to the dissolved or dispersed inorganic precursor of step iii) to obtain an organic-inorganic mixture;

v. heating the organic-inorganic mixture;

and optionally extruding the heated organic-inorganic mixture during or after step v.

In a second aspect, the invention refers to the hybrid solid electrolyte obtainable by the method of the first aspect of the invention.

Additionally or alternatively, the hybrid solid electrolyte of the invention can be defined as one comprising:

- An inorganic phase:

  - of formula $A_3B_{1-x}C_xX_{6-y}Y_y$, wherein A is an alkali metal, B and C are trivalent metals, X and Y are halides, x is comprised between 0 and 1 and y is comprised between 0 and 6; or
  - of formula $A_{2+x}Z_{1-x}B_xX_{6-y}Y_y$, wherein A is an alkali metal, Z is a tetravalent metal, B is a trivalent metal, X and Y are halides, x is comprised between 0 and 1 and y is comprised between 0 and 6; or
  - of formula $A_{2+x}ZX_{6-x}Q_x$, wherein A is an alkali metal, Z is a tetravalent metal; X is a halide; Q is a divalent anion selected from O, S and Se; and $0 < x \leq 1$; and

- A non-conducting polymer;

  wherein the hybrid solid electrolyte comprises clusters of aggregated particles, wherein:

  - the size of said clusters is between 2 and 10 $\mu$m;
  - the size of said particles is between 0.2 and 1 $\mu$m;
  - the mean size of said particles is between 200 and 600 nm;

  wherein the sizes are determined by SEM.

In a third aspect, the invention refers to an electrochemical cell or a battery comprising the hybrid solid electrolyte of the second aspect of the invention.

In a fourth aspect, the invention refers to the use of the electrochemical cell or battery for storing energy, and more particularly for storing energy in a vehicle, an electronic device or an electrical grid.

**DESCRIPTION OF THE FIGURES**

**Figure 1.** Schematic illustration of the conventional "blend HSE" synthesis (top panel) and "in-situ HSE" synthesis (bottom panel).

**Figure 2.** Right: XRD patterns for blend HSE (top trace) and "in-situ HSE" (bottom trace). Left: XRD patterns for "in-situ HSE" before heating at 200 °C (bottom trace) and after heating at 200 °C (top trace).

**Figure 3.** SEM image of "in-situ HSE".

**Figure 4.** Distribution of the size of the "in-situ HSE" particle aggregates.

**Figure 5.** SAXS profiles at RT of in-situ HSE, blend and SEBS (from top to bottom, left panel), and DSC second heating scans (right panel).

**Figure 6.** Storage (G') (left panel) and loss (G") (middle panel) modulus as a function of frequency ($\omega$) at 40 °C. Oscillation stress dependence on G' and G" at 40 °C (right panel) for HSEs.

**Figure 7.** Ionic conductivity of the blend HSE as a function of: (a) processing temperature (top, left panel) (b) and operating pressure at RT (top, right panel) (c). Operating pressure dependence on $\sigma$M/$\sigma$NE ratio for the blend HSE (bottom, left panel) (d) and Nyquist plot for bend and in-situ HSEs (bottom, right panel).

**Figure 8.** Ionic conductivity (left axis) and storage modulus (right axis) as a function of temperature for in-situ HSE (left panel) and blend HSE (right panel).

**DETAILED DESCRIPTION OF THE INVENTION**

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

Throughout the description and claims the word "comprises" and variations of the word, are not intended to exclude other technical features, additives, components or steps. Furthermore, the word "comprise" encompasses the cases of "consist of" and "consists essentially of", which independently represent particular embodiments. Additional objects, advantages and features of the invention will become apparent to those skilled in the art upon examination of the description or may be learned by practice of the invention. For the purposes of the invention, any ranges given include both the lower and the upper end-points of the range. Ranges or values given, such as temperatures, times, molar ratio, volume ratio and the like, should be considered approximate when they are defined by the term "about" (i.e. with a 5% margin of variation around indicated point).

Method for preparing a solid electrolyte

In a first aspect, the invention refers to a method for preparing a hybrid solid electrolyte (also called "method of the invention" throughout the application text) comprising the steps of:

> i. providing an inorganic mixture comprising an alkali metal salt with a halide salt of a trivalent metal;
> ii. adding a non-conducting polymer or monomers thereof to the inorganic mixture of step i) to obtain an organic-inorganic mixture;
> iii. heating the organic-inorganic mixture;

and optionally extruding the heated organic-inorganic mixture during or after step iii.

Step i). In an embodiment of step i), the inorganic mixture can be a physical mixture comprising an alkali metal salt and a halide salt of a trivalent metal or a mixture of an alkali metal salt with a halide salt of a trivalent metal in a medium, preferably a solvent medium. In an embodiment, the physical mixture may be further ground and/or homogenized, such as by mechanical stirring. This solvent-free route offers some environmental advantages.

In an embodiment, the inorganic mixture of step i) is provided in solution, preferably an aqueous solution, i.e. a solution comprising water, preferably comprising water as solvent in the greatest amount by volume with respect to the volume of all solvents comprised in the solution, more preferably comprising water as only solvent in the solution. The aqueous solution may comprise other solvents that are miscible with water, such as alcohols, in particular, methanol, ethanol, propanol, isopropanol or a combination thereof. Other solvents miscible with water can be used such as DMSO, DMF, acetonitrile, acetone, acetic acid, diethanolamine, dimethoxyethane, tetrahydrofuran, 1,4-dioxane, ethylene glycol, N-methyl-2-pyrrolidone. The mixture of water with one or more other solvents can be in any proportion, preferably being water at least 60%, at least 70%, at least 80%, at least 90%, at least 95%, at least 99% (v/v).

In a particular embodiment, step i) refers to providing a mixture consisting of an alkali metal salt with a halide salt of a trivalent metal.

In another particular embodiment, step i) refers to providing a solution consisting of an alkali metal salt, a halide salt of a trivalent metal and the solvent as defined above.

In a particular embodiment, the alkali metal salt and halide salt of a trivalent metal in step i) are dissolved in the solvent, as defined above, at a concentration (each independently) comprised between 0.1M and 5.0 M, preferably between 0.2 M and 3.0 M, more preferably between 0.5 M and 2.0 M.

In any embodiment of step i), an alkali metal salt refers to a salt of a (alkali) metal selected from lithium (Li), sodium (Na), potassium (K), rubidium (Rb), cesium (Cs), and francium (Fr). Preferably, the alkali metal salt is a salt of a metal selected from lithium, sodium and potassium, more preferably from lithium and sodium; even more preferably, the alkali metal salt is a lithium salt.

The anion of the alkali metal salt is preferably an inorganic anion. In a preferred embodiment, the anion of the alkali metal salt can be selected from the group consisting of fluoride, chloride, bromide, iodide, sulfide, nitride, nitrate, nitrite, phosphate, monohydrogen phosphate, dihydrogen phosphate, monohydrogen phosphite, chlorate, perchlorate, chlorite, iodate, bromate, arsenate, sulfate, hydrogen sulfate, hypochlorite, hypobromite, carbonate, bicarbonate, cyanate, cyanide, thiocyanate, oxide, peroxide, hydroxide and the like. In a preferred embodiment, the anion is a monovalent anion, preferably a halide; more preferably the anion is chloride.

In a preferred embodiment, the alkali metal salt of step i) of the method of the invention is an alkali metal halide, preferably a lithium, sodium or potassium halide, more preferably a lithium or sodium halide; even more preferably, a lithium halide. In a more preferred embodiment, the alkali metal salt is selected from LiCl, LiBr, LiI, NaCl, NaBr, NaI, KCl, KBr, or KI. In the most preferred embodiment, the alkali metal salt is LiCl.

The halide salt of a trivalent metal used in step i) is preferably a chloride, bromide or iodide of a trivalent metal, more preferably a chloride of a trivalent metal. In a particular embodiment, the trivalent metal is selected from Al, Ga, In, Tl, Sc, Y, La, V, Nb, Zr, Ta, Cr, Mo, W, Mn, Tc, Re, Fe, Ru, Os, Co, Rh, Ir, Cu, and Ce. In a preferred embodiment, the trivalent metal is selected from Al, Ga, In, Fe, and Tl; more preferably the trivalent metal is In.

In a particular embodiment, the halide of a trivalent metal is a chloride of a trivalent metal as defined in any of the above embodiments.

More than one halide of a trivalent metal can be used in step i) thus leading to an inorganic phase with more than one halide and/or more than one trivalent metal. In a particular embodiment, two halides of a trivalent metal according to the above embodiments are used in step i). Different stoichiometry between the first and second halide of a trivalent metal can be used and may lead to an inorganic phase with the desired chemical structure. In a particular embodiment, the halide of the alkali metal salt and of the halide of the trivalent metal is the same halide, preferably is chloride.

In a preferred embodiment, the alkali metal salt and the halide of a trivalent metal are used in a molar ratio of 3:1.

When dissolved in solution, the mixture comprising the alkali metal salt and the halide of a trivalent metal may be subjected to stirring. Said stirring is meant to facilitate the complete dissolution of both reactants. The stirring may be mechanical o magnetic according to procedures known in the art. The solution may be left under stirring for an appropriate amount of time, typically for at least 10 minutes, at least 30 minutes, at least 1 hour, at least 2 hours, at least 4 hours, at least 6 hours, at least 8 hours, at least 10 hours; preferably, the solution is stirred between 1 minute and 10 hours, more preferably between 10 min and 8 hours.

Step ii). In step ii), a non-conducting polymer or monomers thereof is added to the inorganic mixture of step i) to obtain an organic-inorganic mixture.

In an embodiment, the non-conducting polymer or monomers thereof as a neat solid or liquid is added to the inorganic mixture of step i) in solid form to obtain an organic-inorganic mixture.

In another embodiment, the inorganic mixture from step i) is dissolved or dispersed in at least a solvent before addition of the non-conducting polymer or monomers thereof as a neat solid or liquid. If in step i), the mixture comprising an alkali metal salt with a halide salt of a trivalent metal was provided in solution, said mixture may first be dried, i.e. the solvent may first be evaporated, then the residue re-dissolved/dispersed in at least a solvent.

In a preferred embodiment, the at least a solvent is water, in which the inorganic mixture is dissolved; an organic solvent, in which the inorganic mixture is dissolved or dispersed; or preferably a non-polar organic solvent, in which the inorganic mixture is dispersed. A non-polar organic solvent preferably refers to a solvent with a dielectric constant of lower than 5, preferably as measured at 20°C. Non-polar solvents are preferred as they do not engage in side reactions with the inorganic precursor and at the same time they typically have a low boiling point, thus they can be easily removed by evaporation. In another embodiment, the at least an organic solvent is selected from an aliphatic or aromatic hydrocarbon or a cyclic or linear ether; preferably it is an aromatic hydrocarbon. In yet another embodiment, the at least an organic solvent is selected from the group consisting of pentane, hexane, heptane, decane, cyclohexane, methylcyclohexane, dimethylcyclohexane, decaline, benzene, toluene, xylene (ortho, meta and para-isomer), naphthalene, diethyl ether, dibutyl ether, tetrahydrofuran, 2-methyl tetrahydrofuran, dioxane, and combinations thereof. In a preferred embodiment, the at least an organic solvent is selected from benzene, toluene xylene (ortho, meta and para-isomer), or combinations thereof; even more preferably, the at least one solvent is toluene.

In an embodiment, prior to step ii), the inorganic precursor is dissolved or dispersed in at least an organic solvent, preferably dispersed in at least a non-polar organic solvent, at a concentration of between 0.1 g/mL and 5.0 g/mL, preferably at a concentration of between 0.5 and 3 g/mL, more preferably at a concentration of between 0.75 g/mL and 1.5 g/mL, even more preferably at a concentration of about 1 g/mL.

Steps i) and ii) can be performed in the presence of air or under an inert atmosphere so as to avoid degradation during the dissolution/ dispersion or addition of the non-conducting polymer or monomers thereof; preferably steps i) and ii) are carried out under inert atmosphere. Inert atmosphere refers to an atmosphere where oxygen is excluded and comprises gases such as helium, nitrogen, argon and the like.

In an embodiment, the non-conducting polymer or monomers thereof is added to the inorganic precursor of step i) as a neat solid or liquid to obtain an organic-inorganic mixture. Preferably, the non-conducting polymer or monomers thereof is dissolved or dispersed in a solvent. Appropriate solvents will be any that is compatible with the polymer and the salt precursors. In an embodiment, the non-conducting polymer or monomers thereof is dissolved or dispersed in a non-polar organic solvent. The solvent can be the same or different from the solvent in which the inorganic mixture is dissolved or dispersed, if applicable. In a preferred embodiment, the inorganic mixture and the non-conducting polymer or monomers thereof are dissolved or dispersed in the same solvent; preferably the inorganic mixture is dissolved or dispersed and the non-conducting polymer or monomers thereof is dissolved in a solvent, preferably a non-polar organic solvent. The lists of non-polar organic solvents mentioned above apply to the dissolution of the non-conducting polymer or monomers thereof.

As used in the present application, a "non-conducting polymer" is a polymer that is not electron-conducting nor ion-conducting. Preferably, such non-conducting polymer is non-reactive, i.e. it does not react with the inorganic precursor. The term "monomer" (in the context of polymers) refer to the structural motif before being subjected to polymerisation. It is an independent molecular entity which can be polymerised into a polymer. On the other hand, it is commonplace in the art to refer to "monomeric units" as structural motifs in a polymer that stems from a monomer that has been subjected to polymerisation according to the structure of the monomer, even though the monomeric unit itself may no longer show exactly the same structure as the monomer. Thus, for instance, "styrene monomeric unit" actually refers to a monomeric unit derived from a styrene monomer by polymerisation, even though the styrene monomeric unit no longer comprises the alkene group of styrene. The same applies to acrylate monomeric units. The skilled person is well aware of which monomers correspond to which monomeric units. Similarly, the skilled person is well aware of how to convert monomers into corresponding monomeric units by a process of polymerization. It is understood that the monomers must be polymerizable, i.e. they must comprise a functional group which can react with other monomers in a polymerization reaction. The polymerization may require stimuli (heat, light, etc.) and/or catalyst(s) largely depending on the specific monomer. In an embodiment, the non-conducting polymer is selected from polystyrene (PS), styrene-butadiene rubber (SBR), polymethylmethacrylate (PMMA), polypropylmethacrylate, poly(n-butylmethacrylate), poly(t-butylmethacrylate), polyvinylpyridine, polyimide, polyethylene (PE), polyisobutene (PIB), polypropylene, polybutylene, polyvinylidene fluoride (PVdF), polyacrylonitrile (PAN), polydimethylsiloxane (PDMS); styrene-ethylene-butylene-styrene (SEBS) block copolymer, wherein said SEBS block copolymer optionally comprises maleic anhydride (MA); carboxymetylcellulose (CM), bio-based polymer such as polymers comprising isosorbide; or blends or copolymers thereof; preferably the non-conducting polymer is selected from polystyrene (PS), polyalkylenes such as polyethylene, polypropylene, polybutylene, or blends or copolymers thereof or is a non-conducting block copolymer comprising a polystyrene (PS) block and maleic anhydride (MA); more preferably, the non-conducting polymer is a non-conducting block copolymer comprising a polystyrene (PS) block or a polyalkylene block such as a polyethylene block, a polypropylene block, or a polybutylene block or a combination thereof, or is a non-conducting block copolymer comprising a polystyrene (PS) block and maleic anhydride (MA); even more preferably, the non-conducting polymer is a non-conducting block copolymer comprising a polystyrene (PS) block and a polyalkylene block, such as an ethylene block, a polypropylene block, or a polybutylene block, or a non-conducting block copolymer comprising a polystyrene (PS) block and maleic anhydride (MA). Most preferably, the non-conducting polymer is SEBS (Styrene-EthyleneButylene-Styrene). In a more particular embodiment, the non-conducting polymer is SEBS with a molecular weight comprised between 10000 and 100000 g/mol, preferably between 12000 and 50000 g/mol, more preferably between 15000 and 30000 g/mol.

In another embodiment, monomers are used which are later polymerized to non-conducting polymers such as those defined above; examples of such monomers are styrene, methylmethacrylate, propylmethacrylate, n-butylmethacrylate, t-butylmethacrylate, 2-, 3- or 4-vinylpyridine, imides, ethylene, propylene, 1-butene, vinylidene difluoride, acrylonitrile, dimethyldichlorosilane and combinations thereof. The polymerization may require stimuli (heat, light, etc.) and/or catalyst(s). A skilled person would know how to carry out a polymerization largely depending on the specific monomer used for polymerization.

In a preferred embodiment, the non-conducting polymer or monomers thereof is dissolved or suspended, preferably dissolved, in a solvent, preferably a non-polar organic solvent, and then added to the inorganic precursor, dissolved or dispersed in the same solvent. Examples of solvents used to dissolve or suspend the non-conducting polymer are pentane, hexane, heptane, decane, cyclohexane, methylcyclohexane, dimethylcyclohexane, decaline, benzene, toluene, xylene (ortho, meta and para-isomer), naphthalene, diethyl ether, dibutyl ether, tetrahydrofuran, 2-methyl tetrahydrofuran, dioxane, NMP, DMSO, alkylene carbonates (such as ethylene carbonate) and combinations thereof.

After the solution or dispersion of non-conducting polymer or monomer(s) thereof is added to the dispersed or dissolved inorganic precursors, the mixture may be optionally stirred for a certain time. This can help ensure the homogenization of the so-obtained organic-inorganic mixture. In an embodiment, the organic-inorganic mixture is stirred for at least 10 minutes, at least 30 minutes, at least 1 hour, at least 2 hours, at least 4 hours, at least 6 hours, at least 8 hours, at least 10 hours; preferably, the solution is stirred between 10 minutes and 24 hours, more preferably between 1 hour and 20 hours, even more preferably between 6 hour and 18 hours.

Step iii). Step iii) comprises heating the organic-inorganic mixture of step ii). This step aims to form the hybrid solid electrolyte with a crystalline structure, namely an annealing of the inorganic precursor mixture takes place to form a crystalline inorganic phase. The organic-inorganic mixture obtained in step ii) can be directly cast on a plate on which the heating is subsequently applied. In an embodiment, the organic-inorganic mixture is cast on a plate, preferably a Teflon plate, which is heated, thereby forming the hybrid solid electrolyte.

In an embodiment, the heating temperature of step iii) is at least 150 °C, preferably at least 170 °C, more preferably at least 190 °C, even more preferably at least 200 °C. In another embodiment, the temperature of the heating in step iii) is comprised between any of these minimum heating values and below the decomposition temperature of the non-conducting polymer, such as 300 °C, preferably 280 °C, more preferably 260 °C, even more preferably 250 °C, such as between 150 °C and 300 °C, preferably between 160 °C and 280 °C, more preferably between 170 °C and 260 °C, even more preferably between 180 °C and 250 °C.

The organic-inorganic mixture or hybrid solid electrolyte can be further processed to improve the homogenous distribution of the crystalline inorganic phase with the polymer and give the hybrid solid electrolyte the desired shape and thickness. In an embodiment, the method of the invention comprises, after or during the step of heating the organic-inorganic mixture, subjecting the organic-inorganic mixture to a processing step selected from hot-pressing, extrusion, calendering, lamination, or a combination thereof, preferably hot-pressing or extrusion. In a particular embodiment, the processing step is hot-pressing. In another particular embodiment, the processing step is extrusion. It has advantageously been found that employing the extrusion processing step allows using practically any polymer during the method of the invention, as no dissolution of said polymer is required.

In another embodiment, the heating is performed while simultaneously subjecting the organic-inorganic mixture to said processing step selected from hot-pressing, extrusion, calendering, lamination, or a combination thereof, preferably hot-pressing or extrusion. In a particular embodiment, the processing step is hot-pressing. In another particular embodiment, the processing step is extrusion.

In a preferred embodiment, the processing step, preferably hot-pressing or extrusion, allows to reach a thickness of the resulting electrolyte comprised between 10 and 100 $\mu$m, preferably between 10 and 80 $\mu$m, more preferably between 10 and 60 $\mu$m.

In a particular embodiment, the organic-inorganic mixture is subjected to a processing step, preferably hot-pressing or calendering, under a pressure comprised between 1 and 300 MPa, preferably under a pressure comprised between 10 and 200 MPa, more preferably under a pressure comprised between 75 and 150 MPa, even more preferably under a pressure of about 100 MPa.

If any solvent is present in the organic-inorganic mixture subjected to the heating of step iii), this step preferably additionally removes the solvent. In an embodiment, the heating temperature of step iii) is to or above the boiling temperature of the solvent or mixture of solvents comprised in (i.e. dissolving/dispersing) the organic-inorganic mixture. In an embodiment, the heating temperature of step iii) is at least 150 °C, preferably at least 170 °C, more preferably at least 190 °C, even more preferably at least 200 °C. The upper limit of the heating temperature is below the decomposition temperature of the non-conducting polymer.

Step iii) may alternatively comprise a pre-heating of the organic-inorganic mixture dissolved or dispersed in the solvent or mixture of solvents at lower temperature in order to partly or completely remove the solvent or mixture of solvents, prior to heating at higher temperatures in order to perform an annealing of the inorganic precursor mixture as described above. In an embodiment, the organic-inorganic mixture dissolved or dispersed in the solvent or mixture of solvents is pre-heated at a temperature achieving solvent(s) removal but not crystallization of the inorganic precursor mixture of the organic-inorganic mixture, and then heated according to any of the embodiments above to form the solid electrolyte. In a preferred embodiment, the organic-inorganic mixture is optionally pre-heated at a temperature between 30°C and 60°C, more preferably between 30 °C and 50 °C, even more preferably at about 40 °C and then subjected to the heating temperature according to any of the above embodiments.

In a particular embodiment, step iii) optionally comprises applying vacuum conditions to facilitate the solvent removal. The vacuum can be applied before, during or after the heating and/or optional pre-heating.

All the embodiments regarding additional processing steps discussed above apply to step iii) when the organic-inorganic mixture is dissolved or dispersed in the solvent or mixture of solvents.

As described throughout the present text, the non-conducting polymer can be added in its precursor monomeric mixture (i.e. monomers) form. In an embodiment, polymerisation of the monomeric mixture is achieved prior to employing the hybrid electrolyte of the invention in an electrochemical cell. Preferably, polymerisation of the monomeric mixture is carried out no later than during the heating of the organic-inorganic mixture (step iii.). Polymerisation reactions are well known to the person skilled in the art. Polymerisation reactions include thermal- or photo-polymerisation with or without employing a radical initiator. When polymerisation is thermal polymerisation, then the heating of the organic-inorganic mixture can advantageously further serve the purpose of achieving polymerization. However, when polymerisation is not thermal polymerisation, such as when it is photopolymerisation, the method of the invention requires subjecting the organic-inorganic mixture to conditions which trigger polymerisation, such as exposure to a certain kind of light, the nature of which will depend on the specific monomers or initiator employed.

However, preferably, in any embodiment of the method of the present invention, the non-conducting polymer is added as such, i.e. already as a polymer and not as a precursor monomeric mixture.

After step iii), the hybrid solid electrolyte of the invention is obtained. The inorganic phase of the hybrid solid electrolyte will have a different formula depending on the alkali metal salt and halide salt of a trivalent metal used in step i).

Particularly, the inorganic phase of the hybrid solid electrolyte may have formula:

- $A_3B_{1-x}C_xX_{6-y}Y_y$, wherein A is an alkali metal, B and C are trivalent metals, X and Y are halides, x is comprised between 0 and 1 and y is comprised between 0 and 6; or
- $A_{2+x}Z_{1-x}B_xX_{6-y}Y_y$, wherein A is an alkali metal, Z is a tetravalent metal, B is a trivalent metal, X and Y are halides, x is comprised between 0 and 1 and y is comprised between 0 and 6; or
- $A_{2+x}ZX_{6-x}Q_x$, wherein A is an alkali metal, Z is a tetravalent metal; X is a halide; Q is a divalent anion selected from O, S and Se; and $0<x\leq1$.

Formulae $A_{2+x}Z_{1-x}B_xX_{6-y}Y_y$ and $A_{2+x}ZX_{6-x}Q_x$ as defined above may be obtained by additional steps comprising isovalent and aliovalent, cation and/or anion substitutions as detailed in the below "solid electrolyte" section.

In an embodiment, the inorganic phase comprised in the hybrid solid electrolyte has formula $A_3B_{1-x}C_xX_{6-y}Y_y$, wherein A is an alkali metal as defined above, B and C are trivalent metals as defined above, X and Y are halides, x is comprised between 0 and 1 and y is comprised between 0 and 6. In preferred embodiments A is lithium or sodium; B and, if present, C are different trivalent metals selected from the list consisting of Al, Ga, In, Zr, Tl, Sc, Y, La, V, Nb, Ta, Cr, Mo, W, Mn, Tc, Re, Fe, Ru, Os, Co, Rh, Ir, Cu, and Ce; X and, if present, Y are different halides; x is comprised between 0 and 1 and y is comprised between 0 and 6. In a particular embodiment, x is 0 or 0.5 while y is 0 or 3. In a particular embodiment, the inorganic phase has a formula selected from $Li_3In_{1-x}Fe_xCl_6$, $Li_3In_{1-x}Zr_xCl_6$, $Li_3Zr_{1-x}Fe_xCl_6$, $Li_{2+x}ZrCl_{6-x}O_x$, wherein x is comprised between 0 and 1. In a preferred embodiment, the general formula of the inorganic phase is $A_3BX_6$ (i.e. $A_3B_{1-x}C_xX_{6-y}Y_y$ when x and y are 0), where A is an alkali metal as defined above, B is a trivalent metal as defined above and X is a halide (fluoride, chloride, bromide, or iodide). In a particular embodiment, the inorganic precursor has general formula $A_3InX_6$, where A is an alkali metal and X is a halide (both A and X are defined as above).

In particular embodiment, the inorganic precursor has general formula $Li_3BX_6$, wherein B is a trivalent metal as defined in any of the embodiments above and X is a halide as defined above.

In a particular embodiment, the inorganic precursor has general formula $A_3BCl_6$, wherein A is an alkali metal as defined above and B is a trivalent metal as defined in any of the embodiments above.

In a particular embodiment, the inorganic precursor has general formula $Li_3BCl_6$, wherein B is a trivalent metal as defined in any of the embodiments above.

In a particular embodiment, the inorganic precursor has general formula $Li_3InX_6$, wherein X is a halide defined as above.

In a particular embodiment, the inorganic precursor has general formula $A_3InCl_6$, wherein A is an alkali metal as defined above.

In a more preferred embodiment, the inorganic phase has general formula $Li_3InCl_6$.

In a preferred embodiment, the hybrid solid electrolyte comprises, in particular consists of:

- an inorganic phase of general formula $A_3B_{1-x}C_xX_{6-y}Y_y$, wherein A is an alkali metal as defined above, B and C are trivalent metals as defined above, X and Y are halides, x is comprised between 0 and 1 and y is comprised between 0 and 6;
- a non-conducting polymer selected from polystyrene (PS), styrene-butadiene rubber (SBR), polymethylmethacrylate (PMMA), polypropylmethacrylate, poly(n-butylmethacrylate), poly(t-butylmethacrylate), polyvinylpyridine, polyimide, polyethylene (PE), polyisobutene (PIB), polypropylene, polybutylene, polyvinylidene fluoride (PVdF), polyacrylonitrile (PAN), polydimethylsiloxane (PDMS); SEBS polymers, wherein said SEBS polymers optionally comprise maleic anhydride (MA); carboxymetylcellulose (CM), bio-based polymer such as polymers comprising isosorbide; or blends or copolymers thereof.

In a more preferred embodiment, the hybrid solid electrolyte comprises, in particular consists of:

- an inorganic phase of general formula $A_3BX_6$, where A is an alkali metal as defined above, B is a trivalent metal as defined above and X is selected from fluoride, chloride, bromide, and iodide;
- a non-conducting block copolymer comprising a polystyrene (PS) block and a polyalkylene block selected from a polyethylene block, a polypropylene block, or a polybutylene block.

In a particular embodiment of the first aspect, the invention refers to a method for preparing a hybrid solid electrolyte comprising the steps of:

i. providing an inorganic mixture in the form of a solution comprising an alkali metal salt with a halide salt of a trivalent metal;
ii. drying said solution to obtain an inorganic precursor;
iii. dissolving or dispersing the inorganic precursor in at least a solvent;
iv. adding a solution of a non-conducting polymer or of monomers thereof to the dissolved or dispersed inorganic precursor of step iii) to obtain an organic-inorganic mixture;
v. heating the organic-inorganic mixture;

and optionally extruding the heated organic-inorganic mixture during or after step v.

In step i) of the method, a solution comprising an alkali metal salt with a halide salt of a trivalent metal is provided. This step corresponds to step i) in the first aspect of the invention, including all of its embodiments. More specifically, the solution of step i) is as was described above.

In step ii), the solution from step i) is dried to obtain an inorganic precursor. The solvent can be removed by several techniques known in the art, for example by using a rotary evaporator or vacuum pumps.

In an embodiment, the drying of step ii) can be performed by any means well known to the skilled person. The drying can be performed by applying vacuum conditions (such as between $10^{-10}$ and $10^{-1}$ bar) or by heating or by a combination thereof

Vacuum conditions can be generated by commercially available vacuum pumps. In a particular embodiment, the pressure produced by the vacuum conditions is below $10^{-1}$ bar, preferably below $10^{-2}$ bar, more preferably below $10^{-3}$ bar. In another embodiment, the pressure produced by the vacuum conditions is between $10^{-12}$ and $10^{-1}$ bar, preferably between $10^{-10}$ and $10^{-2}$ bar, more preferably between $10^{-8}$ and $10^{-3}$ bar.

The drying can be at a temperature that does not lead to the reaction of the alkali metal salt with the halide salt of a trivalent metal, such as the reaction between LiCl and $InCl_3$ to form LIC. Not leading to the reaction means that at least 95%, preferably at least 99%, more preferably all, by weight of the alkali metal salt or of the halide salt of a trivalent metal, remains unreacted following heating over a period of 12 hours. In a particular embodiment, said heating is between 30°C and 60°C, more preferably between 30 °C and 50 °C, even more preferably at about 40 °C.

The duration of the drying step ii) will depend on the solvent or mixture of solvents used. In a particular embodiment, the drying step ii) is performed for at least 1 hour, preferably for at least 5 hours, more preferably for at least 10 hours, even more preferably for at least 15 hours. Alternatively, the drying step ii) is performed for an amount of time ranging from 1 hour to 48 hours, preferably from 5 hours to 30 hours, more preferably from 10 hours to 24 hours.

In a specific embodiment, the drying step ii) is performed sequentially or simultaneously applying reduced pressure between $10^{-8}$ and $10^{-1}$ bar and heating at a temperature between 30°C and 60°C, wherein said drying step is performed for an amount of time ranging from 1 hour to 48 hours. More particularly, the solvent(s) as described above is dried according to these conditions.

The drying step ii) leads to an inorganic precursor, typically as a solid. The crystallinity of the inorganic precursors is determined by the crystallinity of the starting materials, which have not yet generated the final inorganic phase of the electrolyte.

The inorganic precursor as defined in any of the embodiments above may be in a solvated form, depending on the solvent or mixture of solvents used in step i). In a particular embodiment, the inorganic precursor is obtained as a solvate, preferably as a hydrate.

In step iii), the inorganic precursor obtained in step ii) is dissolved or dispersed in at least a solvent, as was described for the inorganic mixture in the first aspect of the invention. In step iv), a solution of a non-conducting polymer or of monomers thereof is added to the dissolved or dispersed inorganic precursor of step iii) to obtain an organic-inorganic mixture, as was described for step ii) of the method of the first aspect of the invention. Step v) involves heating the organic-inorganic mixture, as was described for step iii) of the method of the first aspect of the invention.

After step v), the hybrid solid electrolyte of the invention is obtained.

In a more particular embodiment, the first aspect of the invention refers to a method for preparing a hybrid solid electrolyte comprising the steps of:

  i. providing a solution comprising an alkali metal halide and a chloride of a trivalent metal selected from Al, Ga, In, Zr, Tl, Sc, Y, La, V, Nb, Ta, Cr, Mo, W, Mn, Tc, Re, Fe, Ru, Os, Co, Rh, Ir, Cu, and Ce;
  ii. drying said solution by applying vacuum and, optionally, heating to obtain an inorganic precursor;
  iii. dispersing the inorganic precursor in at least an organic solvent selected from the group consisting of pentane, hexane, heptane, decane, cyclohexane, methylcyclohexane, dimethylcyclohexane, decaline, benzene, toluene, xylene (ortho, meta and para-isomer), naphthalene, diethyl ether, dibutyl ether, tetrahydrofuran, 2-methyl tetrahydrofuran, dioxane, and combinations thereof.;
  iv. adding a non-conducting polymer solution to the dispersed inorganic precursor of step iii) to obtain an organic-inorganic mixture, wherein the non-conducting polymer is selected from polystyrene (PS), polymethylmethacrylate (PMMA), polypropylmethacrylate, poly(n-butylmethacrylate), poly(t-butylmethacrylate), polyvinylpyridine, polyimide, polyethylene, polypropylene, polybutylene, polyvinylidene fluoride (PVdF), polyacrylonitrile (PAN), polydimethylsiloxane (PDMS) or blends or copolymers thereof and wherein the monomers are styrene, methylmethacrylate, propylmethacrylate, n-butylmethacrylate, t-butylmethacrylate, 2-, 3- or 4-vinylpyridine, imides, ethylene, propylene, 1-butene, vinylidene difluoride, acrylonitrile, dimethyldichlorosilane and combinations thereof; and
  v. heating the organic-inorganic mixture, wherein the heating temperature is to or above the boiling temperature of the solvent or mixture of solvents in the organic-inorganic mixture.

In a particular embodiment, the first aspect of the invention refers to a method for preparing a solid electrolyte comprising the steps of:

  i. providing a solution comprising an alkali metal salt selected from lithium halide, sodium halide and potassium halide and a chloride of a trivalent metal selected from Al, Ga, In, Fe and Tl;
  ii. drying said solution at a temperature between 30°C and 60°C to obtain an inorganic precursor;
  iii. dispersing the inorganic precursor in at least an organic aromatic solvent selected from benzene, toluene, xylene (ortho, meta and para-isomer), naphthalene;
  iv. adding a solution of non-conducting polymer or monomer(s) thereof to the dispersed inorganic precursor of step iii) to obtain an organic-inorganic mixture, wherein the non-conducting polymer is selected from polystyrene (PS), polyethylene, polypropylene, polybutylene, or blends or copolymers thereof and wherein the monomers are selected from styrene, ethylene, propylene, 1-butene, or combinations thereof; and

v. heating the organic-inorganic mixture at a temperature comprised between 150 °C and 300 °C.

In a more particular embodiment, the first aspect of the invention refers to a method for preparing a solid electrolyte comprising the steps of:

i. providing a solution comprising lithium halide, wherein the halide is preferably chloride; and a halide, preferably a chloride, of trivalent In;
ii. drying said solution at a temperature between 30°C and 60°C to obtain an inorganic precursor;
iii. dispersing the inorganic precursor in at least an organic aromatic solvent selected from benzene, toluene, xylene (ortho, meta and para-isomer), naphthalene;
iv. adding a solution of non-conducting polymer or monomer(s) thereof to the dispersed inorganic precursor of step iii) to obtain an organic-inorganic mixture, wherein the non-conducting polymer is selected from polystyrene (PS), polyethylene, polypropylene, polybutylene, or blends or copolymers thereof and wherein the monomers are selected from styrene, ethylene, propylene, 1-butene, or combinations thereof; and
v. heating the organic-inorganic mixture at a temperature comprised between 150 °C and 300 °C.

Solid electrolyte

In a second aspect, the invention refers to the hybrid solid electrolyte obtainable by the method of the first aspect of the invention.

Additionally or alternatively, the hybrid solid electrolyte of the invention can be defined as one comprising, or in particular consisting of:

- An inorganic phase as was described in any embodiment of the first aspect of the invention;
- A non-conducting polymer as was described in any embodiment of the first aspect of the invention;

wherein the hybrid solid electrolyte comprises clusters of aggregated particles, wherein:

- the size of said clusters is between 2 and 10 $\mu$m;
- the size of said particles is between 0.2 and 1 $\mu$m;
- the mean size of said particles is between 200 and 600 nm, preferably 300 and 500 nm, more preferably between 350 and 450 nm;

wherein the sizes are determined by SEM.

In particular, said sizes correspond to the Feret diameter, the Feret diameter corresponding to the distance of the longest line that can be drawn through the particle or cluster, also known as maximum caliper diameter. Values can be directly taken from ImageJ software for SEM images of the solid electrolyte, as described in detail in Example 3 hereinbelow. In an embodiment, the term "mean" refers to a mean of at least 15 particles, preferably of at least 50 particles, more preferably of at least 100 particles, such as from any of these values up to 150 particles. The clusters, in particular the particles, can comprise the inorganic phase, the non-conducting polymer, or both.

In a preferred particular embodiment:

- the inorganic phase is of general formula $A_3B_{1-x}C_xX_{6-y}Y_y$, wherein A is an alkali metal as defined above, B and C are trivalent metals as defined above, x is comprised between 0 and 1 and y is comprised between 0 and 6; and
- the non-conducting polymer is selected from polystyrene (PS), styrene-butadiene rubber (SBR), polymethylmethacrylate (PMMA), polypropylmethacrylate, poly(n-butylmethacrylate), poly(t-butylmethacrylate), polyvinylpyridine, polyimide, polyethylene (PE), polyisobutene (PIB), polypropylene, polybutylene, polyvinylidene fluoride (PVdF), polyacrylonitrile (PAN), polydimethylsiloxane (PDMS), SEBS polymers, wherein said SEBS polymers optionally comprise maleic anhydride (MA); carboxymetylcellulose (CM), bio-based polymers such as polymers comprising isosorbide; or blends or copolymers thereof.

In a more preferred and particular embodiment:

- the inorganic phase is of general formula $A_3BX_6$, where A is an alkali metal as defined above, B is a trivalent metal as defined above and X is selected from fluoride, chloride, bromide, and iodide;
- the non-conducting polymer is a block copolymer comprising a polystyrene (PS) block and a polyalkylene block selected from a polyethylene block, a polypropylene block, or a polybutylene block.

In a particular embodiment, the inorganic phase is of general formula $A_3InX_6$, where A is an alkali metal and X is a halide (both A and X are defined as above) and the non-conductive polymer is as defined in any of the embodiments above.

In particular embodiment, the inorganic phase is of general formula $Li_3BX_6$, wherein B is a trivalent metal as defined in any embodiment of the first aspect of the invention and X is a halide defined as above, and the non-conductive polymer is as defined in any of the embodiments above.

In a particular embodiment, the inorganic phase is of general formula $A_3BCl_6$, wherein A is an alkali metal as defined above and B is a trivalent metal as defined in any embodiment of the first aspect of the invention, and the non-conductive polymer is as defined in any of the embodiments above.

In a particular embodiment, the inorganic phase is of general formula $Li_3BCl_6$, wherein B is a trivalent metal as defined in any embodiment of the first aspect of the invention, and the non-conductive polymer is as defined in any of the embodiments above.

In a particular embodiment, the inorganic phase is of general formula $Li_3InX_6$, wherein X is a halide defined as above, and the non-conductive polymer is as defined in any of the embodiments above.

In a particular embodiment, the inorganic phase of general formula $A_3InCl_6$, wherein A is an alkali metal as defined above, and the non-conductive polymer is as defined in any of the embodiments above.

In a preferred embodiment, the inorganic phase is $Li_3InCl_6$ and the non-conductive polymer is as defined in any of the embodiments above.

In a particular embodiment, the hybrid solid electrolyte comprises between 40 and 95 wt.% of inorganic phase, preferably with formula $A_3BX_6$ as defined in any of the above embodiments; preferably between 60 and 90 wt.% of inorganic phase, preferably with formula $A_3BX_6$ as defined in any of the above embodiments; more preferably, between 70 and 85 wt.% of inorganic phase, preferably with formula $A_3BX_6$ as defined in any of the above embodiments; even more preferably, about 80% of inorganic phase, preferably with formula $A_3BX_6$ as defined in any of the above embodiments.

It is worth noting that the wt.% is relative to the total weight of the solid electrolyte.

In a particular embodiment, the hybrid solid electrolyte obtainable by the method of the invention comprises between 5 and 50 wt.% of non-conducting polymer as defined in any of the above embodiments; preferably, between 10 and 40 wt.% of non-conducting polymer as defined in any of the above embodiments; more preferably, between 15 and 30 wt.% of non-conducting polymer as defined in any of the above embodiments; even more preferably, about 20 wt.% of non-conducting polymer as defined in any of the above embodiments. Throughout the present disclosure, amounts of the different components comprised in the solid electrolyte are chosen so as to never exceed 100% by weight with respect to the total weight of the solid electrolyte.

In a particular embodiment, the hybrid solid electrolyte comprises, preferably consists of, between 50 and 95 wt.% of inorganic precursor, preferably with formula $A_3BX_6$ as defined in any of the above embodiments, and between 5 and 50 wt.% of non-conducting polymer as defined in any of the above embodiments.

In a particular embodiment, the hybrid solid electrolyte comprises, preferably consists of, between 60 and 90 wt.% of inorganic precursor, preferably with formula $A_3BX_6$ as defined in any of the above embodiments and between 10 and 40 wt.% of non-conducting polymer as defined in any of the above embodiments.

In a particular embodiment, the hybrid solid electrolyte comprises, preferably consists of, between 70 and 85 wt.% of inorganic precursor, preferably with formula $A_3BX_6$ as defined in any of the above embodiments and between 15 and 30 wt.% of non-conducting polymer as defined in any of the above embodiments.

The solid electrolyte obtainable by the method of the invention is characterized by high values of storage (G') and loss (G") moduli. These values can be calculated by employing an ARES-G2 Rheometer.

In an embodiment, the solid electrolyte obtainable by the method of the invention is characterized by a storage modulus (G') comprised between 1 and 1000 MPa, preferably between 10 and 1000 MPa, more preferably between 100 and 1000 MPa, even more preferably of about 1 M Pa.

The hybrid solid electrolyte obtainable by the method of the invention is also characterized by high values of yield stress ($\sigma y$). This parameter can be calculated by employing an ARES-G2 Rheometer. In an embodiment, the solid electrolyte obtainable by the method of the invention is characterized by a $\sigma y$ comprised between 0.1 and 100 MPa, preferably between 10 and 100 MPa, more preferably between 25 and 75 MPa, even more preferably of about 32 MPa. The higher yield stress values are advantageous in terms of cell failure prevention by suppressing the lithium dendrites formation.

The method of the invention may further comprise a further step wherein the electrolyte, in particular the inorganic phase that results from the heating of the organic-inorganic mixture, is subjected to a cationic exchange, in particular to a cationic exchange replacing part or all of the trivalent metal for another trivalent metal (isovalent) or for a tetravalent metal (aliovalent). More particularly, said inorganic phase of formula $A_3B_{1-x}C_xX_{6-y}Y_y$, preferably of formula $A_3BX_{6-y}Y_y$, in any of its above described embodiments is subjected to a cationic exchange, even more specifically to an isovalent cation exchange to arrive at another inorganic phase of formula $A_3B_{1-x}C_xX_{6-y}Y_y$; or to an aliovalent cation exchange such as with a tetravalent cation to arrive at an inorganic phase of formula $A_{2+x}Z_{1-x}B_xX_{6-y}Y_y$, such as of formula $A_{2+x}Z_{1-x}Fe_xX_{6-y}Y_y$ (B is Fe), more particularly of formula $A_{2+x}Z_{1-x}B_xX_6$, such as of formula $A_{2+x}Z_{1-x}Fe_xX_6$, or more particularly of formula $A_2ZX_{6-y}Y_y$ (x is 0), such as of formula $A_2ZX_6$, wherein A is an alkali metal, Z is a tetravalent metal, B is a trivalent metal, X and Y are halides, x is comprised between 0 and 1 and y is comprised between 0 and 6.

In further embodiments, A, B, X, Y and y are independently as defined in any embodiment for formula $A_3B_{1-x}C_xX_{6-y}Y_y$.

In a preferred embodiment, Z is $Zr^{4+}$ or $Hf^{4+}$, preferably it is $Zr^{4+}$. In a preferred embodiment, x is comprised between 0 and 0.5. More particularly, Z is $Zr^{4+}$ or $Hf^{4+}$, preferably it is $Zr^{4+}$, and x is comprised between 0 and 0.5.

In a preferred particular embodiment, in the above embodiments, A is Li. In a preferred particular embodiment, in the above embodiments, X is Cl. In a preferred and more particular embodiment, in the above embodiments, A is Li and X is Cl. Preferably, Z is $Zr^{4+}$ or $Hf^{4+}$, preferably it is $Zr^{4+}$. In a preferred embodiment, x is comprised between 0 and 0.5. More particularly, Z is $Zr^{4+}$ or $Hf^{4+}$, preferably it is $Zr^{4+}$, and x is comprised between 0 and 0.5.

Compounds of formula $A_2ZX_6$ as described above may further undergo aliovalent anion substitution, where halide X is replaced by a divalent anion to arrive at a phase of general formula $A_{2+x}ZX_{6-x}Q_x$. Thus, in a particular embodiment, the inorganic phase has formula $A_{2+x}ZX_{6-x}Q_x$, wherein A is an alkali metal, Z is a tetravalent metal; X is a halide; Q is a divalent anion selected from O, S and Se and $0<x\leq1$.

In a preferred particular embodiment, in the compounds of formula $A_{2+x}ZX_{6-x}Q_x$, A is Li. In a preferred particular embodiment, X is Cl. In a preferred particular embodiment, Z is $Zr^{4+}$ or $Hf^{4+}$, preferably it is $Zr^{4+}$. In a preferred embodiment, x is comprised between 0.5 and 1. More particularly, Z is $Zr^{4+}$ or $Hf^{4+}$, preferably it is $Zr^{4+}$, and x is comprised between 0.5 and 1; preferably, x being 1. In a preferred particular embodiment, Q is O or S, preferably it is O. In a preferred particular embodiment, Q is O or S, preferably it is O, while x is comprised between 0.1 and 1; preferably, x being comprised between 0.5 and 1. Thus, preferred compounds of formula $A_{2+x}ZX_{6-x}Q_x$ are compounds of formula $Li_{2+x}ZrCl_{6-x}O_x$, wherein $0<x\leq1$, preferably x being comprised between 0.5 and 1, even more preferably being x = 1 (compound $Li_3ZrCl_5O$).

It is understood that the inorganic phase comprised in the electrolyte of the invention can also therefore possess these formulae.

Alternatively or additionally, the above inorganic phases comprising the tetravalent metal may be attained when, in step i of the method of the present invention, the inorganic mixture may further comprise a salt, preferably a halide salt, of the tetravalent metal, such as $ZrCl_4$. By way of example, a compound of formula $Li_{2+x}Zr_{1-x}Fe_xCl_6$ may be attained when said inorganic mixture comprises LiCl, $ZrCl_4$ and $FeCl_3$.

Isovalent and aliovalent substitutions of inorganic phases are well-known in the art and are reported for instance in Combs et al., Journal of The Electrochemical Society, 2022, 169; Helm et al., ChemRxiv, 2021 (doi: 10.26434/chemrxiv.14449620.v1); or L. Hu et al., Nat. Commun. 2023 (doi: https://doi.org/10.1038/s41467-023-39522-1); and references cited therein; all of which are herein incorporated by reference.

Electrochemical cell and battery

In a third aspect, the invention refers to an electrochemical cell or a battery comprising the hybrid solid electrolyte of the second aspect of the invention.

In a particular embodiment, the electrochemical cell or battery is a secondary electrochemical cell or secondary battery. In a preferred embodiment, the electrochemical cell or battery is a secondary electrochemical cell or secondary battery.

In an embodiment, the electrochemical cell or secondary battery comprises the hybrid solid electrolyte as defined in the second aspect of the invention, which can be used as anolyte, catholyte and/or separator.

In an embodiment, the electrochemical cell or battery comprises the hybrid solid electrolyte of the invention and a negative electrode (or anode) which is a metal anode, preferably an alkali metal anode, and more preferably a lithium metal anode. In another embodiment, the anode comprises a metal or metalloid suitable for reversibly forming an alloy with metal cations, preferably alkali metal cations, and more preferably lithium cations. The skilled person knows how to select appropriate metals or metalloids suitable for forming the alloy. For instance, examples of metals or metalloids suitable for reversibly forming an alloy with lithium cations are Mg, Al, Zn, Bi, Cd, Sb, Ag, Si, Pb, Sn, or In which in particular can form alloys such as LiMg, LiAl, LiZn, $Li_3Bi$, $Li_3Cd$, $Li_3Sb$, $Li_4Ag$, $Li_{4.4}Si$, $Li_{4.4}Pb$ or $Li_{4.4}Sn$. In an embodiment, the anode comprises such alloys.

In an embodiment, the electrochemical cell or battery comprises the hybrid solid electrolyte of the invention and a cathode suitable for reversibly incorporating metal cations, preferably alkali metal cations, and more preferably lithium cations. More specifically, the cathode comprises an active material, which is the component of the cathode enabling said reversible incorporation to take place.

In an embodiment, the cathode comprises metal cations, preferably alkali metal cations, and more preferably lithium cations. In a particular embodiment, the cathode is a cathode obtainable from the intercalation of metal cations in its structure, in particular at its active sites.

In an embodiment, the cathode comprises an active material selected from one of the following:

- a lithium nickel-rich layered oxide of formula $Li_yNi_{1-x}M_xO_2$, wherein M represents at least one metal and $0 \leq x \leq 1$, $0.8 \leq y \leq 1.2$;
- a spinel oxide of formula $LiNi_{2-x}M_xO_4$, wherein M represents at least one transition metal and $0 \leq x \leq 2$;
- a lithium-rich layered oxide of formula $Li_{1+x}M_{1-x}O_2$ wherein M represents at least one transition metal and $0 \leq x \leq 1$;
- a lithium polyanion of formula $Li_2MSiO_4$ wherein M is Mn, Co or Ni; of formula $LiMPO_4$ wherein M is Fe, Co or Ni; of formula $Li_2MP_2O_7$ wherein M is Mn, Co or Ni; or of formula $Li_3V_2(PO_4)_3$, $Li_2VOP_2O_7$, or $LiVP_2O_7$; and
- a phosphate or sulfate of formula $Li_yMXO_4Z$; wherein y = 0, 1, 2; M = transition metal; X = P, S; Z = F, O, OH.

Cathodes as described herein are commercially available and well known in the art, such as from Li et al., Chem Soc Rev, 2017, 46, 3006-3059, or Lyu et al., Sustainable Materials and Technologies, 2019, 21, e00098.

The cathodes of the present invention may further comprise a conductive carbon material such as carbon black or activated carbon. Preferably, the conductive carbon material is carbon black. The term "carbon black" [C.A.S. NO. 1333-86-4] refers to colloidal aciniform carbon particles produced by the incomplete combustion or thermal decomposition of gaseous or liquid hydrocarbons such as heavy petroleum distillates and residual oils, coal-tar products, natural gas or acetylene. Its physical appearance is that of a black, finely divided pellet or powder.

In an embodiment, the hybrid solid electrolyte of the invention acts as a separator in the electrochemical cell or battery. A separator is a medium between the two electrodes of an electrochemical cell that has to fulfill at least two functions. One function is to store and accommodate the electrolyte and, simultaneously, to assure ionic conductivity within the electrodes and between the anode and cathode. The further function of the separator is to electrically insulate the two electrodes from one another, in order to avoid short circuits. The separator is a separating means, usually a plate, positioned between the anode and cathode in the electrochemical cell or battery to avoid the electrical contact between them.

In a particular embodiment, the electrochemical cell of the present invention may comprise the hybrid solid electrolyte of the invention and an additional separator.

The separator is in contact with the electrolyte, particularly it is partially or completely contacted with the electrolyte, which favors the flow of ions from one electrode to the other one. Typical separators include, but are not limited to, polymeric membrane mainly based on a polyolefin, such as polypropylene, (PP) polyethylene (PE), or any combination thereof (PP-PE). The polypropylene (or polyethylene or PP-PE) membrane may comprise one or more layer of polypropylene (or polyethylene or PP-PE). In some embodiments, the separator of the electrochemical cell comprises inorganic materials such as a glass fiber.

Uses and applications

In a fourth aspect, the invention refers to the use of the electrochemical cell or battery for storing energy, and more particularly for storing energy in a vehicle, an electronic device or an electrical grid.

The vehicle can be an automobile, in particular a heavy automobile such as buses or trucks, a rail vehicle, a marine vehicle, an aircraft or a spacecraft.

Preferably, the electronic device is a portable electronic device, such as a laptop, a tablet, a cellular phone, a smart phone or a smart watch.

Preferably, the electrical grid is associated to a solar panel or a wind turbine.

EXAMPLES

The following examples are intended to illustrate but not to limit the disclosed embodiments.

Lithium chloride (LiCl, 99.9%, ultra-dry) and indium (III) chloride (InCl$_3$, 99,999 %, anhydrous) were obtained from Alfa Aesar. SEBS (Mw=18,000) were obtained from Sigma-Aldrich. Anhydrous toluene was obtained from Scharlab. All the reagents were used without further purification and under glovebox atmosphere.

Example 1: Inorganic precursor and LIC synthesis

The inorganic phase was synthesized by sol-gel method. LiCl and InCl$_3$ were weighted in a 3:1 stoichiometric ratio inside the glovebox. The reagents were dissolved in deionized water (10 wt.%) and the solution was stirred for 15 minutes. The solvent was removed with a rotary evaporator and the residue was subsequently fully dried under high vacuum at 40 °C overnight to obtain the inorganic precursor (HLIC) which was transferred to the glovebox.

Comparative material LIC was obtained according to the procedure above, except that the residue was directly subjected to annealing at 200 °C for 5h under high vacuum, instead of being dried at 40°C overnight.

Both HLIC and LIC were ground in a mortar before further use.

Example 2. Hybrid electrolytes preparation

The HSE of the invention (or "in-situ HSE") was prepared by weighting the HLIC obtained according to example 1 and dispersing it in toluene (1g/mL) inside a glovebox. After 2h stirring, a 15 wt.% SEBS solution in toluene was added to the HLIC dispersion and stirred overnight. After pouring the mixture on a Teflon plate and pre-drying at 40°C for 5 hours on the hot-plate, the membrane was dried at 200°C under high vacuum for 5 hours.

The preparation of the comparative HSE (or "blend HSE") was obtained by mixing the LIC dispersion in toluene (1 g/ml) with SEBS solution, casting on a Teflon plate and drying overnight at room temperature under vacuum.

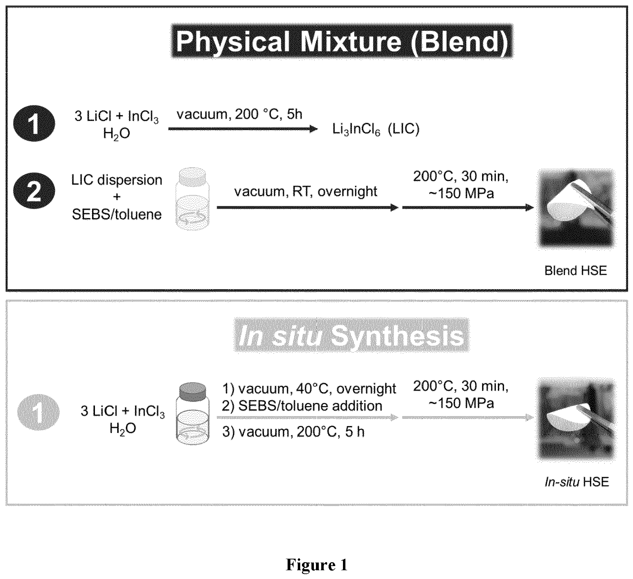

Figure 1 summarizes the syntheses of in-situ HSE and blend HSE.

Example 3. Material characterization

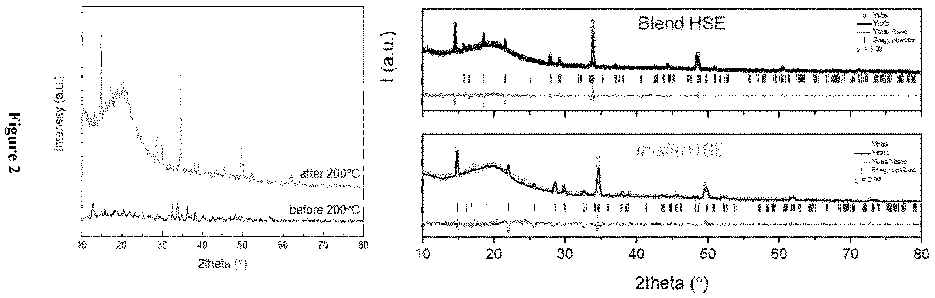

X-ray diffraction (XRD, Bruker D8 Discover X-ray diffractometer, $\lambda$Cu-K$\alpha$1 = 1.54056 Å radiation in the 2$\theta$ range 10 - 80 ° with a step width of 0.02044°) was used to examine the crystallinity of the inorganic material. The XRD technique confirmed the presence of the inorganic material in the hybrid electrolyte (Figure 2). The XRD patterns of both in-situ and blend HSEs match the crystalline lithium indium chloride structure with corresponding characteristic peaks at 14, 28, 29, 34 and 49°. The Rietveld refinement (not shown) indicated that $Li_3InCl_6$ has a monoclinic symmetry with the C2/m space group. The influence of the SEBS presence in the composition was disregarded as the polymer does not have a crystalline structure that could influence the spectra of the HSEs.

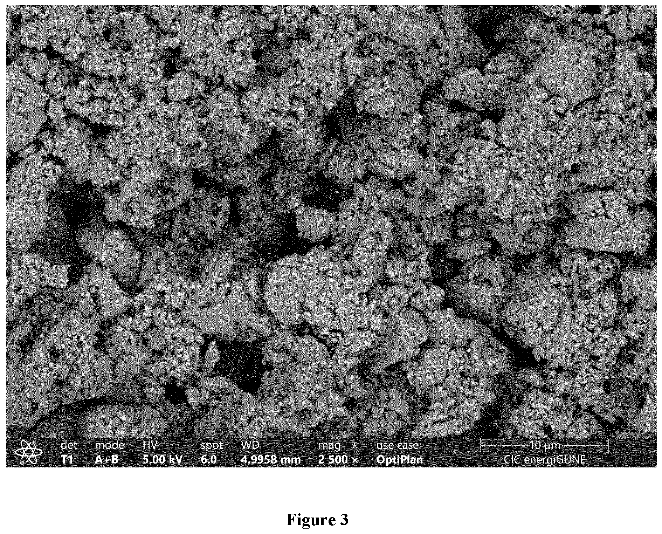

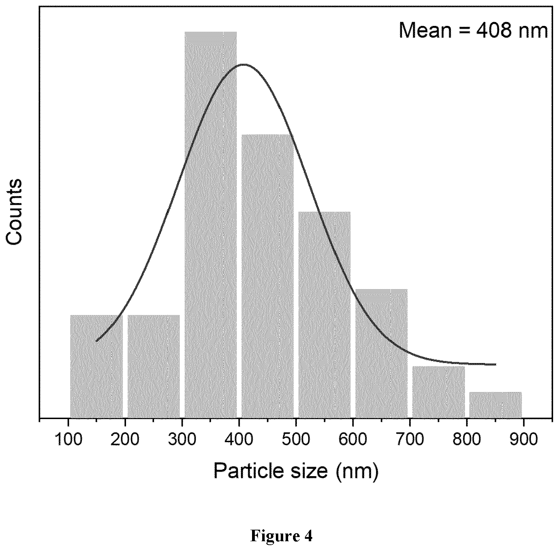

The morphology of the electrolytes were investigated by scanning electron microscopy (SEM, quanta 200 FEG high-resolution scanning electron microscope) applying 10 kV acceleration voltage. Samples were prepared in a glovebox and then transferred to SEM in a transfer holder without exposure to ambient air. The surface of in-situ HSE presents many aggregates (see figure 3). Unlike the in-situ HSE, the blend HSE presents a homogeneous distribution between the SEBS and $Li_3InCl_6$ particles. EDX mapping (not shown) confirms that the inorganic material distributes evenly in blend HSE, being the inorganic regions (Cl and In atoms from $Li_3InCl_6$) and organic regions (C atoms from SEBS polymer) well homogenized. For in-situ HSE, the final inorganic phase appears to be localized and more clearly visible than the polymer binder. In-situ HSE presents aggregates that form clusters of about 2 - 10 μm and are formed by particles of 0.2 - 1 μm. The mean size of the particles as measured by SEM and calculated by ImageJ 1.53k software was 408 nm (see figure 4 for the distribution of the particle aggregates). Said size was calculated as follows:

- ImageJ 1.53k software, preferably version 1.52p, from Wayne Rasband and contributors is in the public domain and available from National Institutes of Health, USA, at https://imagej.net/ij/index.html

Original SEM images (tiff files) were used to set the scale, as follows:

1 - Draw line over the scale bar and select Analyze → Set Scale; In Set Scale window enter the value of the scale bar depicted in the original tiff file into the 'Known Distance' box; Then, Change the 'Unit of Measurement' box to μm, and check 'Global'. The obtained scale value was annotated for each SEM image.

2 - Each SEM image was opened using the Snip & Sketch Windows 10 tool. The portion where the particles were depicted was selected, and the file saved as JPG file.

3 - In the ImageJ software proceed as follows: File Open (the JPG file was chosen); Image - Type - 8 byte; Analyze - Set scale (For example, for 50000x with 400 nm scale bar, the scale was 0.1825 pixel/nm); Analyze - Measure. A table is automatically generated for all particles measured, containing number of particle and length as a Feret diameter of measured particle. Then, the procedure (Analyze - Measure) was repeated at least 50 times for different particles in the image and different SEM images.

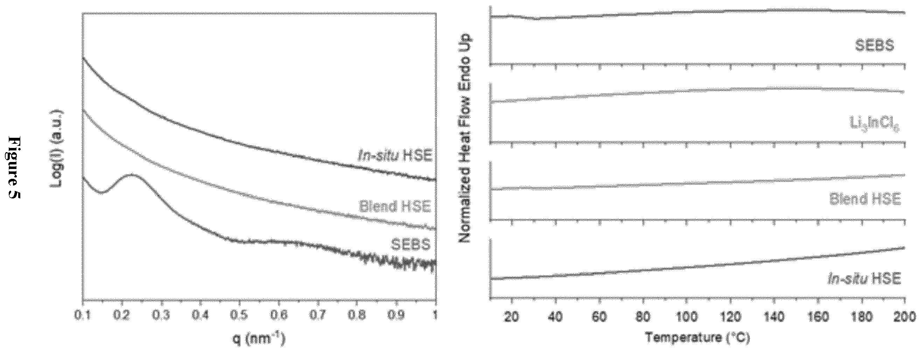

Thermal properties were studied by differential scanning calorimetry (DSC, PerkinElmer 8000) in a range from -40 to 240 °C with 10 °C/min heating rate and thermogravimetric analysis (TGA) from 40 to 800 °C under $N_2$ at 10 °C/min. The samples were placed in DSC aluminum pans. The DSC curve for the second heating scan between 10 - 200 °C is presented in Figure 5. The glass transition of SEBS (Tg = 20 °C) is hampered when the inorganic material is present as it does not present any transition. Phase transition was not observed for any of the hybrids within the wide range of temperature. The excellent thermal stability of both HSEs up to around 300 °C renders them appealing for automotive applications as components of all-solid-state batteries. The combination of a thermally stable polymer and LIC in the blend HSE does not affect the thermal stability of the final electrolyte.

Small-angle X-ray scattering (SAXS) was performed at beamline BL11-NCD, ALBA Synchrotron, Cerdanyola del Vallés, Barcelona, Spain. The spectra obtained at room temperature (fig. 5) reveal the disordered structure of the electrolytes For comparison, pure SEBS polymer (used at the 20 wt.% in the hybrid electrolytes) presents ordered lamellar structure with a primary scattering peak at q = q* = 0.225 nm. The significant amount of inorganic material in the composites results in a substantial reduction of the ordered morphology.

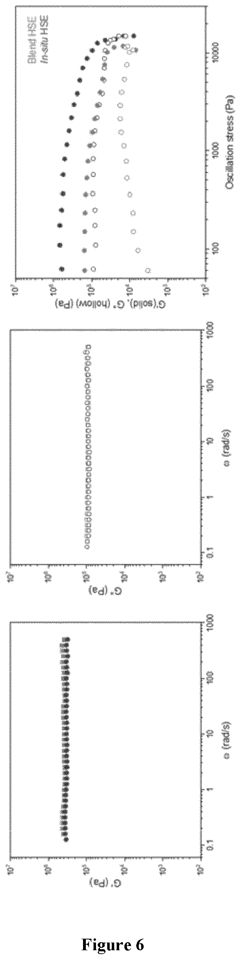

Rheometer ARES-G2 was used to measure the rheological properties of the membranes. Fig. 6 (left and middle panel) presents the comparison between rheological properties of the electrolytes at 40 °C as a function of frequency. Interestingly, both in-situ and blend samples present a similar range of the storage (G') and loss (G") modulus values. The membranes exhibit the G' values of about $7.88 \cdot 10^5$ and $5.40 \cdot 10^5$ Pa for the blend and in-situ HSE, respectively. G" values decrease by the factor of 3.6 and 2.8 to about $2.18 \cdot 10^5$ and $1.94 \cdot 10^5$ Pa for the blend and in-situ HSE, respectively. The high inorganic content (80%) of the inorganic in the hybrid electrolytes allows achieving high values for both storage and loss moduli. Therefore, the materials present an elastic nature.

The amplitude sweep test at 40 °C for both HSEs are shown in Figure 6 (right panel). This measurement allowed to determine the yield stress (σy). The point at which the storage modulus crosses loss modulus is taken as the σy. The obtained value is 13000 Pa for the blend HSE and 32000 Pa for the in-situ HSE, which is almost a 2.5 times increase. These results are advantageous in terms of cell failure prevention by suppressing the lithium dendrites formation.

Example 4, Electrochemical characterization

The total ionic conductivity of the membranes were measured with electrochemical impedance spectroscopy (EIS). The frequency range was 7 MHz to 1Hz with amplitude 40 mV. The EIS spectra were collected in a range from 30 to 90 °C, each taken at intervals of 10°C and the ionic conductivity was calculated from equation:

$$\sigma_i = \frac{l}{RA}$$

where:

- $l$ is the membrane thickness (cm);
- A is the working area between of the electrolyte (cm$^2$); and
- R is the total resistance ($\Omega$).

Activation energy (Ea) of the electrolytes were calculated using equation:

$$\sigma_i(T) = A exp\left(-\frac{E_a}{K_B T}\right)$$

where A is the pre-exponential constant, $E_a$ is the energy of activation calculated from the slope of the Arrhenius plot (eV), $k_B$ is the Boltzmann constant (J·K$^{-1}$), and T the temperature (K).

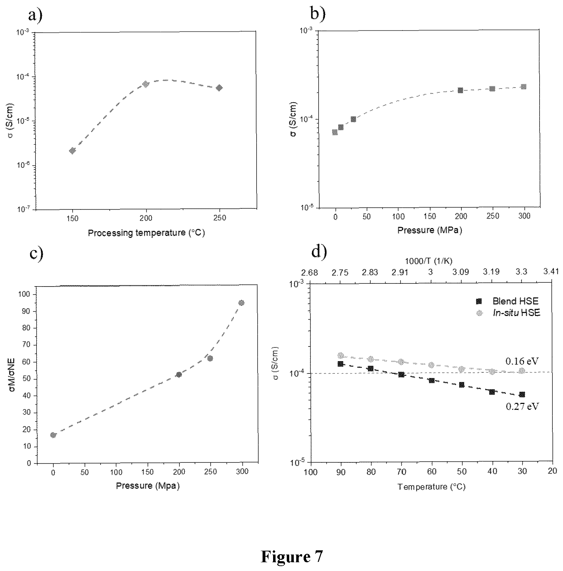

The last processing step (v) is crucial in terms of material final ion transport properties. The influence of the temperature on the ionic conductivity was evaluated. For each temperature, the membrane was hot-pressed for 30 min under the same pressure (around 100 MPa). In Figure 7a, three different processing temperatures typical for melting and processing the investigated SEBS matrix (150, 200 and 250 °C) are compared. From 150 °C up to 200 °C the densification of the hybrid improves accordingly with a $\sigma i$ increase by a factor of about 30. The highest ionic conductivity values around 10$^{-4}$ S/cm were obtained for 200 °C. The increase of the processing temperature above 200 °C causes only a slight decrease of $\sigma i$. The dependence of $\sigma i$ on pressure is shown in Fig. 7b. Higher ionic conductivity values for the hybrids can be achieved by increasing the operating pressure. Without any applied pressure, the ionic conductivity values are in the range of 10$^{-5}$ S/cm. However, operating pressure as low 10 or 50 MPa (thus, with improved contact between the HSE surface and current collector) impacts slightly the $\sigma i$ values. Interestingly, the ionic conductivity reaches a plateau at higher operating pressures above 200 MPa. The $\sigma i$ of the hybrid electrolytes exceeds 10$^{-4}$ S/cm, reaching a maximum of 0.23 mS/cm at 300 MPa and room temperature.

Li diffusion coefficient measurements by PFG-NMR showed high values (1.13 10$^{-10}$ m$^2$/s) at 30 °C. From the Nernst-Einstein equation, the ionic conductivity for the blend HSE ($\sigma$NE) was calculated and compared as ratio with the ionic conductivity measured with EIS ($\sigma$M) at different pressures (Figure 7c). Those ratios are above 1. Lack of the pressure applied during the Li diffusion measurements can explain the results. $\sigma$M reaches the maximum at 300 MPa which is almost 2 orders of magnitude higher than $\sigma$NE ($\sigma$M/$\sigma$NE = 94). Overall, the ratio $\sigma$M/$\sigma$NE increases with the increase of the operating pressure. That is in agreement with the data in the Figure 7b.

Figure 7d represents the ionic conductivity dependence on temperature. Ion transport in the hybrid electrolytes is faster with the increasing temperature (from room temperature to 90°C). The ionic conductivity for both HSEs is in the order of about 10$^{-4}$ S/cm. In-situ HSE presents slightly higher ionic conductivities than the blend HSE in all the range of temperatures.

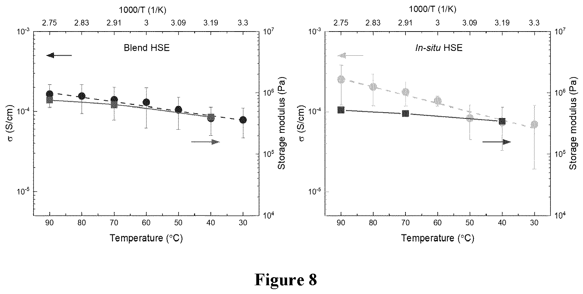

Figure 8 summarizes and compares the temperature dependence of ionic conductivity and storage modulus of both hybrid electroytes. Generally, the temperature has minimal effect on either $\sigma y$ or G' values for both blend and in-situ HSE. Consequently, in the investigated materials, ionic transport and the mechanical properties of the material are temperature independent.

**Claims**

1. A method for preparing a hybrid solid electrolyte comprising the steps of:

   i. providing an inorganic mixture comprising an alkali metal salt with a halide salt of a trivalent metal;
   ii. adding a non-conducting polymer or monomers thereof to the inorganic mixture of step i) to obtain an organic-inorganic mixture;
   iii. heating the organic-inorganic mixture;

   and optionally extruding the heated organic-inorganic mixture during or after step iii.

2. The method according to claim 1 comprising the steps of:

   i. providing an inorganic mixture in the form of a solution comprising an alkali metal salt with a halide salt of a trivalent metal;
   ii. drying said solution to obtain an inorganic precursor;
   iii. dissolving or dispersing the inorganic precursor in at least a solvent;
   iv. adding a solution of a non-conducting polymer or of monomers thereof to the dissolved or dispersed inorganic precursor of step iii) to obtain an organic-inorganic mixture;
   v. heating the organic-inorganic mixture;

and optionally extruding the heated organic-inorganic mixture during or after step v.

3. The method according to claim 1 or 2, wherein the alkali metal salt of step i) is selected from LiCl, LiBr, LiI, NaCl, NaBr, NaI, KCl, KBr, or KI.

4. The method according to any one of claims 1 to 3, wherein the halide salt of a trivalent metal of step i) is a chloride, bromide or iodide of a trivalent metal selected from Al, Ga, In, Zr, Tl, Sc, Y, La, V, Nb, Ta, Cr, Mo, W, Mn, Tc, Re, Fe, Ru, Os, Co, Rh, Ir, Cu, or Ce.

5. The method according to any one of claims 1 to 4, wherein the inorganic mixture of step i) is provided in the form of an aqueous solution.

6. The method according to any one of claims 1 to 5, wherein the non-conducting polymer or monomers thereof is dissolved in an organic solvent selected from benzene, toluene, o- or m- or p-xylene, or combinations thereof.

7. The method according to any one of claims 1 to 6, wherein the non-conducting polymer is selected from polystyrene, polyethylene, polypropylene, polybutylene, or blends or copolymers thereof.

8. The method according to any one of claims 1 to 7, wherein the organic-inorganic mixture is heated at a temperature comprised between 100 °C and 350 °C.

9. The method according to any one of claims 2 to 8, wherein the drying of step ii) is performed at a temperature of between 30°C and 60°C.

10. The method according to any one of claims 1 to 9, comprising extruding the organic-inorganic mixture during or after the step of heating the organic-inorganic mixture.

11. A hybrid solid electrolyte obtainable by the method as defined in any one of claims 1 to 10.

12. A hybrid solid electrolyte comprising:

- An inorganic phase:

- of formula $A_3B_{1-x}C_xX_{6-y}Y_y$, wherein A is an alkali metal, B and C are trivalent metals, X and Y are halides, x is comprised between 0 and 1 and y is comprised between 0 and 6; or
- of formula $A_{2+x}Z_{1-x}B_xX_{6-y}Y_y$, wherein A is an alkali metal, Z is a tetravalent metal, B is a trivalent metal, X and Y are halides, x is comprised between 0 and 1 and y is comprised between 0 and 6; or
- of formula $A_{2+x}ZX_{6-x}Q_x$, wherein A is an alkali metal, Z is a tetravalent metal; X is a halide; Q is a divalent anion selected from O, S and Se; and $0<x\leq1$; and
- A non-conducting polymer;

wherein the hybrid solid electrolyte comprises clusters of aggregated particles, wherein:

- the size of said clusters is between 2 and 10 $\mu$m;
- the size of said particles is between 0.2 and 1 $\mu$m;
- the mean size of said particles is between 200 and 600 nm;

wherein the sizes are determined by SEM.

13. The solid electrolyte according to any of claims 11 to 12 comprising between 50 and 95 wt.% of inorganic phase and between 5 and 50 wt.% of non-conducting polymer.

14. The solid electrolyte according to any one of claims 11 to 13, wherein

- the inorganic phase comprises, preferably consists of, $Li_3InCl_6$; and
- the non-conducting polymer is selected from polystyrene, polyethylene, polypropylene, polybutylene, or blends or copolymers thereof.

15. An electrochemical cell or battery comprising an anode, a solid electrolyte according to any one of claims 11 to 14, a cathode and, optionally, a separator.

Figure 1

**Figure 2**

| det | mode | HV | spot | WD | mag ᴿ | use case | 10 µm |
| T1 | A+B | 5.00 kV | 6.0 | 4.9958 mm | 2 500 × | OptiPlan | CIC energiGUNE |

**Figure 3**

**Figure 4**

Figure 5

Figure 6

**Figure 7**

**Figure 8**

Europäisches
Patentamt

European
Patent Office

Office européen
des brevets

# EUROPEAN SEARCH REPORT

**Application Number**

EP 23 30 6871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 965 199 A1 (CHINA AUTOMOTIVE BATTERY RES INST CO LTD [CN] ET AL.) 9 March 2022 (2022-03-09) | 1,3-8, 11,15 | INV. H01M10/0562 H01M10/052 |
| A | * paragraphs [0093], [0114] * | 2,9,10, 12-14 | H01M10/056 |
| X | US 2021/336263 A1 (WANG RUOFAN [US] ET AL) 28 October 2021 (2021-10-28) | 11-13,15 | |
| A | * paragraph [0223] * | 1-10,14 | |
| X,D | CN 115 700 941 A (BAOWU CARBON TECH CO LTD; BAOSHAN IRON & STEEL) 7 February 2023 (2023-02-07) | 11-15 | |
| A | * examples 1, 2 * | 1-10 | |

**TECHNICAL FIELDS SEARCHED (IPC)**

H01M

The present search report has been drawn up for all claims

| Place of search | Date of completion of the search | Examiner |
|---|---|---|
| Munich | 3 April 2024 | Gregori, Giuliano |

EPO FORM 1503 03.82 (P04C01)

## ANNEX TO THE EUROPEAN SEARCH REPORT
## ON EUROPEAN PATENT APPLICATION NO.

EP 23 30 6871

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2024

| Patent document cited in search report | | Publication date | Patent family member(s) | | Publication date |
|---|---|---|---|---|---|
| EP 3965199 | A1 | 09-03-2022 | EP | 3965199 A1 | 09-03-2022 |
| | | | JP | 7390692 B2 | 04-12-2023 |
| | | | JP | 2022531271 A | 06-07-2022 |
| | | | US | 2022216507 A1 | 07-07-2022 |
| | | | WO | 2020220697 A1 | 05-11-2020 |
| US 2021336263 | A1 | 28-10-2021 | CN | 115443567 A | 06-12-2022 |
| | | | EP | 4104233 A1 | 21-12-2022 |
| | | | JP | 7389277 B2 | 29-11-2023 |
| | | | JP | 2023519758 A | 12-05-2023 |
| | | | JP | 2024020440 A | 14-02-2024 |
| | | | KR | 20220152333 A | 15-11-2022 |
| | | | KR | 20230079480 A | 07-06-2023 |
| | | | US | 2021336263 A1 | 28-10-2021 |
| | | | US | 2022263091 A1 | 18-08-2022 |
| | | | US | 2023352688 A1 | 02-11-2023 |
| | | | WO | 2021217045 A1 | 28-10-2021 |
| CN 115700941 | A | 07-02-2023 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 16210371 A1
- CN 115700941 A

**Non-patent literature cited in the description**

- **J. FENG et al.** *Nano Convergence*, 2021, vol. 8
- **B. ZHAO et al.** *Materials Letters*, 2022, vol. 310, 131463
- **E. NAZMUTDINOVA et al.** *ChemRxiv*, 2023
- **COMBS et al.** *Journal of The Electrochemical Society*, 2022, vol. 169
- **HELM et al.** *ChemRxiv*, 2021
- **L. HU et al.** *Nat. Commun.*, 2023
- **LI et al.** *Chem Soc Rev*, 2017, vol. 46, 3006-3059
- **LYU et al.** *Sustainable Materials and Technologies*, 2019, vol. 21, e00098
- *CHEMICAL ABSTRACTS*, 1333-86-4